(19) Europäisches Patentamt
European Patent Office
Office européen des brevets

(11) **EP 3 203 330 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(51) Int Cl.:
**G05B 13/02** (2006.01)

(21) Anmeldenummer: **17154539.5**

(22) Anmeldetag: **03.02.2017**

(54) **SOFTSENSOR ZUR IDENTIFIKATION UND REGELUNG ODER STEUERUNG EINES LÜFTUNGSSYSTEMS**

SOFT SENSOR FOR THE IDENTIFICATION AND REGULATION OR CONTROL OF A VENTILATION SYSTEM

CAPTEUR VIRTUEL DESTINÉ À L'IDENTIFICATION ET AU RÉGLAGE OU À LA COMMANDE D'UN SYSTÈME DE VENTILATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2016 DE 102016201745**

(43) Veröffentlichungstag der Anmeldung:
**09.08.2017 Patentblatt 2017/32**

(73) Patentinhaber: **Vaillant GmbH**
**42859 Remscheid (DE)**

(72) Erfinder:
• **Clauß, Roland**
**40699 Erkrath (DE)**
• **Smits, Volker**
**47559 Kranenburg (DE)**

(74) Vertreter: **Popp, Carsten et al**
**Vaillant GmbH**
**IR-IP**
**Berghauser Straße 40**
**42859 Remscheid (DE)**

(56) Entgegenhaltungen:
**US-B1- 7 359 842**

• **WENQI GUO ET AL: "Technologies toward thermal comfort-based and energy-efficient HVAC systems: A review", SYSTEMS, MAN AND CYBERNETICS, 2009. SMC 2009. IEEE INTERNATIONAL CONFERENCE ON, IEEE, PISCATAWAY, NJ, USA, 11. Oktober 2009 (2009-10-11), Seiten 3883-3888, XP031575243, ISBN: 978-1-4244-2793-2**

**Beschreibung**

Die Erfindung betrifft ein Verfahren und einen Softsensor zur Identifikation und Regelung oder Steuerung linearer oder nichtlinearer dynamischer Systeme eines Lüftungssystems im Bereich der Raumlufttechnik unter Verwendung eines neuronalen Netzes, wobei das Lüftungssystem dafür sorgt, Luftaustauschströme zwischen Gebäudeäußerem und Gebäudeinneren zu fördern. Der Abluftstrom wird gewöhnlich aus dem Innenraum eines Gebäudes abgezogen und tritt durch das Lüftungssystem nach der eventuellen Wärmerückgewinnung als Fortluftstrom aus. Gleichzeitig gibt das Lüftungssystem fortwährend Frischluft in den Innenraum des Gebäudes ab, wobei diese Frischluft vom Gebäudeäußerem als Zuluftstrom durch das Lüftungssystem angesaugt wird.

In DE 10 2011 002 734 B4 ist eine Lüftungsvorrichtung zum Einbau in eine thermische Gebäudehülle offenbart, wobei Luftstrom-, Innenfeuchte- und $CO_2$-Messeinrichtung vorgesehen und dazu ausgebildet sind, die Lüftungsvorrichtung unter Berücksichtigung der Abweichungsvorgaben durch die vom Benutzer vorgegebenen Stellgrößen geregelt wird. Ähnlicher Stand der Technik mit Messeinrichtungen und damit zusammenhängenden Regeleinheiten ist z. B. in WO 90/08293 und DE 196 00 694 A1 beschrieben. Hierbei werden mehrere Messeinrichtungen in Form von reellen Sensoren zum Regeln der Lüftungsvorrichtung eingesetzt, um genaue und detaillierte Messdaten über die Lüftungsvorrichtung zu erhalten. Dies führt zu einem hohen Kostenaufwand für den Benutzer der Lüftungsvorrichtung. US7359842 beschreibt eine Vorrichtung mit einem Softsensor.

Bekannte Regler oder Steuerungen aus dem Stand der Technik basieren üblicherweise auf einem physikalischen Modell und WENN-DANN-Regeln sowie der Überwachung von vorab festgelegten Grenzwerten oder bekannten Stellgrößen. Derartige klassische Regler oder Steuerungen haben jedoch den Nachteil, dass das Aufstellen des physikalischen Modells aufwändig ist und die Regler nicht für alle Lüftungssysteme eine optimale Regelung ermöglichen. Vor allem aus der ökonomischen Sicht ist die Lösung auch nicht die Beste.

Ein künstliches neuronales Netz basiert meist auf der Vernetzung vieler Neuronen. Da es in der Lage ist, bestimmten Verhalten durch Algorithmus zu erlernen, wird es in der Praxis immer mehr angewandt. Es wird auch zunehmend in der Regelungstechnik eingesetzt. Beispielsweise offenbart die DE 199 42 144 A1 ein Verfahren zur adaptiven Identifikation und adaptiven Dämpfung von Schwingungen, wobei durch ein "Harmonisch Aktiviertes Neuronales Netz" Parameter der Schwingung oder Ungleichförmigkeit identifiziert und eine entsprechende Kompensationsgröße ermittelt wird.

Aus der DE 10 2010 012 682 B4 ist ein Verfahren zur Regelung einer Stellgröße unter Verwendung eines auf einem Chip basierenden, neuronalen Netzes bekannt, wobei das neuronale Netz an einem Sensor angeschlossen ist und Zugriff auf eine Datenbank hat. Durch das neuronale Netz wird eine neue als dominant erkannte Abweichungsfunktion ermittelt und sie auf ein entsprechendes Stellglied zum Regeln angewandt.

Die KR 101261198 offenbart ein Verfahren zur Steuerung der abnehmenden Indoor-Temperatur eines Gebäudes durch eine Klimaanlage, in dem die Messdaten von Indoor- und Outdoor-Temperatur sowie deren Gefälle einem neuronalen Netz als Eingangsgrößen eingegeben werden. Hierbei wird die durch das Netzmodell errechnete Zeit, wann die Indoor-Temperatur die vorgegebenen Ziel-Temperatur erreicht, als Ausgangsgröße ausgegeben. Des Weiteren wird diese Zeit mit einer als Ziel festgelegten Größe verglichen, dann wird ein Boiler oder ein Gebläse geregelt. Außerdem wird die Indoor-$CO_2$-Konzentration hierunter mitberücksichtigt.

Ein Softsensor, der auch als Einschätzer, Beobachter, oder Softwaresensor bezeichnet wird, ist meistens durch einen Rechner oder ein ähnliches Gerät mit einem implementierten künstlichen neuronalen Netz ausgebildet.

Die Aufgabe der Erfindung ist daher, eine einfache und wirtschaftliche Lösung bereitzustellen, alternativ zu Hardwaresensoren oder Messeinrichtungen einen Softsensor für das Lüftungssystem zur Verfügung zu stellen, welcher in der Lage ist, das lineare oder nichtlineare dynamische Übertragungsverhalten von Messgrößen auf die jeweiligen Zielgrößen mit einer hinreichenden Genauigkeit und Qualität zu modellieren, um im Lüftungssystem auch dynamische Messgrößen ohne zusätzliche Hardwaresensoren erfassen zu können, außerdem mit Hilfe des Softsensors das Lüftungssystem zu regeln oder zu steuern.

Die Erfindung löst die Aufgabe gemäß dem unabhängigen Anspruch 1 durch ein Verfahren zur Identifikation und Regelung oder Steuerung linearer oder nichtlinearer dynamischer Systeme für ein aktives Lüftungssystem im Bereich der Raumlufttechnik unter Verwendung eines Softsensors, der durch einen Rechner ausgebildet oder als Schaltung im Lüftungssystem integriert ist, wobei der Softsensor mit einem geeigneten künstlichen neuronalen Netz implementiert ist, wobei

- die Eingangsgrößen Luftaustauschstrom, Drehzahl und PWM-Signal auf den Eingang des Softsensors gegeben werden,
- der Softsensor mit einem geeigneten Lernalgorithmus trainiert wird,
- die Eingangsgrößen approximiert und als Ausgangsgrößen elektrische Leistung und Druckverlust auf einem Speichermedium abgelegt werden,
- mit den Ausgangsgrößen die zugrundeliegende Dynamik des Lüftungssystems prognostiziert, und das Lüftungssystem geregelt oder gesteuert wird.

Kennwerte für elektrische Leistung können zwar mittels statischer Kennfelder approximiert werden. Dafür ermittelt man mit Hilfe von Herstellerdaten und zusätzlichen Vermessungen des Systems sowie dem Zusammenhang zwischen der Zielgröße elektrische Leistung und Messgrößen wie z. B. Drehzahlsignal, Luftaustauschstrom, PWM (Puls-Weiten-Modulations)-Signal etc., um die Zielgröße ohne zusätzliche Messgeräte möglichst genau abzubilden. Hierzu ist das PWM- Signal das Spannungseingangssignal eines Ventilators.

Diese statische Approximation eignet sich allerdings nicht für dynamische Prozesse. Das nichtlineare Verhalten eines Systems kann zugegebenermaßen mit globalen Linearisierungsansätzen approximiert werden, jedoch ist dann die Ausgangsgröße des Softsensors stark abhängig vom Betriebspunkt. Beispielsweise wird die Systemantwort bei der elektrischen Leistung und dem Druckverlust eines Ventilators nicht vom augenblicklichen Wert des Systemreizes allein bestimmt, da diese zeitvariierende Größen sind. Dabei ist der Druckverlust die Druckdifferenz, die der Ventilator aufbauen muss, um die Widerstände im Lüftungssystem zu überwinden.

Zur Identifikation nichtlinearer Prozesse ohne wesentliche Apriori-Kenntnisse der Modellstruktur wird der erfindungsgemäße Softsensor eingesetzt. In Simulationen sowie in Versuchen in der Praxis hat sich gezeigt, dass ein lokales Modellnetz mit normierten radialen Basisfunktionen ein sehr gut geeignetes Modellnetz zur Identifikation nichtlinearer Prozesse ist, was nachfolgend in den Beispielen dargestellt ist.

Da die elektrische Leistung über die drei Messgrößen Drehzahl, Luftaustauschstrom und PWM-Signal als Eingangsgrößen durch den Softsensor recht genau approximiert werden kann, ist es aus ökonomischer Sicht sehr vorteilhaft, einen Softsensor anstatt zusätzlicher Hardware-Sensoren wie Leistungsmessgeräten oder Drucksensoren verbunden mit hohen Kostenaufwand einzusetzen. Für die Messgrößen Drehzahl, Luftaustauschstrom und PWM-Signal können einfache Messeinrichtungen im Lüftungssystem preiswert integriert werden.

Die Ausgangsgröße elektrische Leistung ist hervorragend geeignet als Führungsgröße für eine Kaskadenregelung des Lüftungssystems zu verwenden.

Der Druckverlust ist ebenfalls eine wichtige Kenngröße. Mit steigendem Druckverlust sinkt der Wirkungsgrad, da mehr Energie bzw. eine höhere Leistung notwendig ist, um das Luftwechseln konstant zu halten.

Der Druckverlust ist eine zeitlich variierende Größe, außerdem ist er abhängig von vielen Faktoren wie dem Zustand des Rohrleitungssystems sowie des Filters im System, möglicher fehlerhafter Einstellung der Ein- und Auslassventile oder dem Einfrieren des Wärmetauschers, sowie weiteren Faktoren.

In der bisherigen Praxis werden Wartungsintervalle für verschiedene Typen von Lüftungssystemen meistens vom Hersteller vorgegeben. Bei einem intelligenten Lüftungssystem können die Wartungsintervalle in Abhängigkeit von dem Zustand des Lüftungssystems gestaltet werden. Dafür kann der Softsensor gezielt mit Messgrößen, die einem bestimmten Zustand entsprechen, auf bekannten Mustern der Ausgangsgrößen trainiert werden. Die Muster der Eingangsgrößen und Ausgangsgrößen werden miteinander verglichen, und die Abweichung wird dabei möglichst minimal gehalten, so dass die bekannten Muster im Lüftungssystem von dem Softsensor detektiert werden können. Hierbei spiegelt das Muster eine Verhaltensweise der Daten wider.

Dazu gehören beispielsweise die Detektion von Störungsvorgängen, wodurch der Kunde beziehungsweise der Kundendienst gezielt informiert werden kann. Ein Beispiel für die Verunreinigung ist die stark verschmutzte Rohrleitung, welche aufgrund eines höheren Druckverlusts im Vergleich zum Normalzustand identifiziert werden kann. Daraufhin kann eine entsprechende Wartungsmeldung ausgegeben werden. Dies kann dadurch realisiert werden, dass der Softsensor gezielt darauf trainiert wird, dass eine Verschmutzung des Rohrleitungssystems durch ein Muster der Ausgangsgröße Druckverlust abgebildet wird, so dass der Softsensor beim Erkennen dieses Musters eine Warnmeldung ausgibt. Das gleiche gilt auch für eine Verschmutzung der Filter im System, fehlerhafte Einstellung der Ein- und Auslassventile sowie ein Einfrieren des Wärmetauschers. Andere ähnliche Störungen oder regelmäßig wartungserfordernde Einrichtungen, die unter direktem Einfluss der Ausgangsgrößen stehen, können selbstverständlich mit Hilfe des Softsensors detektiert werden.

Die elektrische Leistung kann über die Zeit aufaddiert werden, damit der Verbrauch der elektrischen Energiemenge des Lüftungssystems in einem gewünschten Zeitraum mit Hilfe des Softsensors ermittelt und prognostiziert wird.

Um die Geräuschemissionen des Lüftungssystems zu reduzieren, kann ebenfalls mittels des Softsensors die Frequenz als Zielgröße approximiert werden, in dem der Frequenzbereich hohe Amplituden aufweist, vermieden wird, beispielsweise Resonanzfrequenzen. Damit wird das Lüftungssystem gezielt in einem gewünschten Frequenzbereich geregelt.

Ferner löst die Erfindung die Aufgabe durch einen Softsensor zur Ermittlung der Ausgangsgrößen Leistung und Druckverlust eines aktiven Lüftungssystems im Bereich der Raumlufttechnik,

- wobei eine Einrichtung durch einen Computer oder eine Schaltung im Lüftungssystem integriert ist, welche direkt, per LAN, WLAN oder Bluetooth an dem Lüftungssystem angeschlossen ist,
- und der Softsensor mit einem geeigneten künstlichen neuronalen Netz implementiert ist,
- wobei der Softsensor dazu ausgebildet ist, Messgrößen des Lüftungssystems als Eingangsgrößen mit einem geeigneten Lernalgorithmus zu trainieren, und die Ausgangsgrößen als Regel- oder Steuergrößen zu verwenden, um den Betrieb des Lüftungssystem zu regeln oder zu steuern.

Der Softsensor kann als eine eigenständige Einrichtung oder im Lüftungssystem integriert ausgebildet werden, wobei der Softsensor mit einem mehrdimensionalen neuronalen Netz mit normierten radialen Basisfunktionen implementiert ist, und mit einem lokalen Modellnetz mit einem Lolimot-Algorithmus trainiert ist. Nach der Trainingsphase besitzt der Softsensor eine Einrichtung zum Detektieren des Lüftungssystems. Ferner kann man mit Hilfe des Softsensors den elektrischen Energieverbrauch des Lüftungssystems prognostizieren.

Die Erfindung wird nachfolgend anhand der Zeichnungen und Ausführungsbeispiele näher erläutert. Hierbei zeigen

    Fig. 1 eine Skizze des lokalen Modellnetzes,
    Fig. 2 die Verläufe der elektrischen Leistung eines Lüftungsgerätes,
    Fig. 3 den Verlauf des Druckverlustes eines Lüftungssystems.

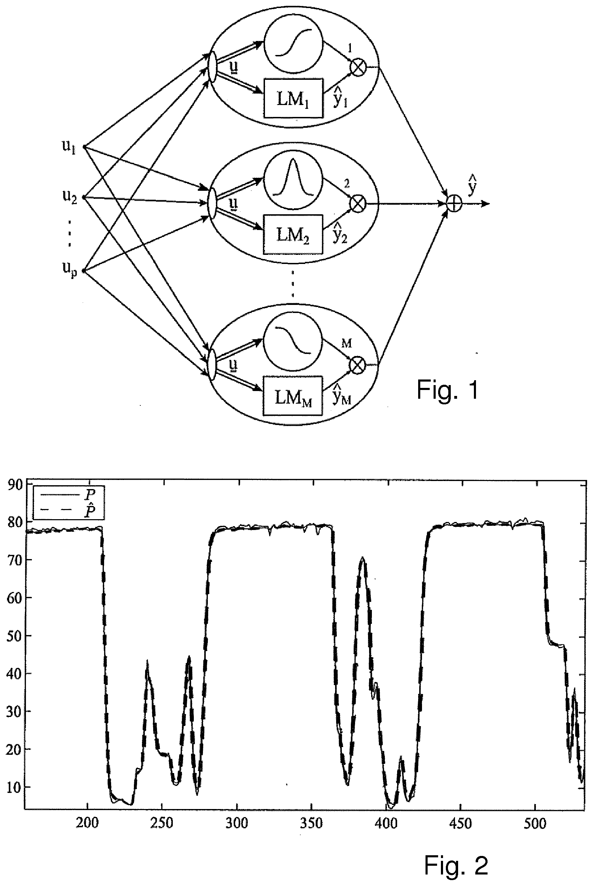

Fig. 1 zeigt eine Skizze mit dem hier angewandten lokalen Modellnetz, wobei es auf einem neuronalen Netz mit normierten radialen Basisfunktionen basiert, und jedes Neuron mit einem lokalen linearen Teilmodell versehen ist. Die radialen Basisfunktionen beschreiben dabei den Gültigkeitsbereich der jeweiligen Teilmodelle. Die besondere Eigenschaft des lokalen Modellnetzes ist das effiziente Training, in dem die Parameter der verdeckten Schicht mit heuristischen Verfahren bestimmt werden. Weiterhin wird mit einer geringeren Anzahl von Neuronen bereits eine genaue Approximation erreicht. Außerdem ist es möglich, für rekursiv arbeitende Algorithmen, wie zum Beispiel LOcal Linear MOdell Tree (Lolimot)-Algorithmus, eine Modellkomplexität mit maximaler Anzahl an Neuronen vorzugeben. Das lokale Modellnetz eignet sich gut für mittel- bis hoch-dimensionale Abbildungsaufgaben aufgrund der schnellen Parameterberechnung und des relativ langsamen Anstieg der Parameterzahl mit der Eingangsdimension. Besonders aus regelungstechnischer Sicht ist das lokale Modellnetz mit linearen Teilmodellen sehr erstrebenswert, da die Teilmodelle zur Auslegung von Regler und zur linearen Stabilitätsanalyse verwendet werden können.

Der Lolimot-Algorithmus ist ein rekursiver, wachsender Algorithmus mit einem heuristischen Baum-Konstruktionsverfahren zur Approximation von Funktionen basierend auf dem lokalen Modellnetz. Er ist sowohl für statische als auch für dynamische System-Identifikation geeignet. Bei einem iterativen Verfahren wird die Struktur des Modellnetzes optimiert.

In Fig. 2 sind die Verläufe der elektrischen Leistung eines Lüftungsgerätes über einen Zeitraum von 150 Sekunden bis 550 Sekunden dargestellt. Die durchgezogene Kurve kennzeichnet hierbei die Messwerte eines realen Referenzsensors und die gestrichelte Kurve die Ausgangsgrößen des modellierten dynamischen und nichtlinearen Softwaresensors. Hierbei sind die Leistungswerte über die drei Messgrößen Drehzahl, Luftaustauschstrom und PWM-Signal approximiert.

In einer modernen Anlage gehört Energiemanagement zunehmend zur wichtigen Anlagedaten. Der Wirkungsgrad eines Energiesystems ist definiert durch:

$$\eta = \frac{Nutzen}{Aufwand}$$

Diesen gilt es möglichst zu maximieren, in dem beispielsweise der Aufwand minimiert oder der Nutzen maximiert wird.

Die Herausforderung eines Lüftungssystems besteht darin, elektrische Energie mittels Ventilatoren in kinetische Energie nach Möglichkeit effizient umzuwandeln, um eine definierte Luftwechselrate sicherzustellen. Nach der Definition des Wirkungsgrades entspricht die elektrische Energie vereinfacht dem Aufwand und der Luftwechsel oder Luftaustausch dem Nutzen eines Lüftungssystems.

Aufgrund der guten Approximationsfähigkeit des Softsensors kann die elektrische Leistung des Gerätes ohne zusätzlichen Hardwaresensor-Einsatz berechnet werden.

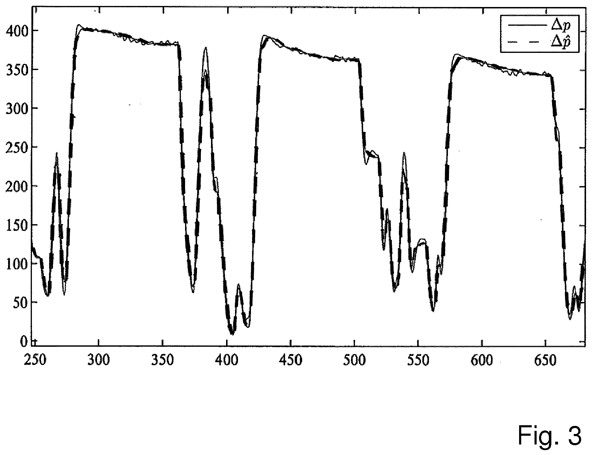

Fig. 3 zeigt den Verlauf des Druckverlustes eines Lüftungssystems über einen Zeitraum von 250 Sekunden bis 700 Sekunden. Der Druckverlust wurde während der Vermessungs- und Verifikationsexperimente mit Hilfe eines Klappensystems angeregt und mit einem Referenzdrucksensor gemessen, und der Verlauf ist mit der durchgezogenen Kurve dargestellt. Der von dem Softsensor approximierte Verlauf ist mit der gestrichelten Kurve dargestellt. Der Vergleich zwischen dem gemessenen und modellierten Verhalten beweist die Qualität des identifizierten Netzes. Die Verifikation des Softsensors zeigt auch im Fall der Druckverlust-Messwerte hinreichend genaue Ergebnisse.

**Patentansprüche**

1. Verfahren zur Identifikation und Regelung oder Steuerung linearer oder nichtlinearer dynamischer Systeme für ein aktives Lüftungssystem im Bereich der Raumlufttechnik unter Verwendung eines Softsensors, der durch einen Rechner ausgebildet oder als Schaltung im Lüftungssystem integriert ist, wobei der Softsensor mit einem geeigneten künstlichen neuronalen Netz implementiert ist, **dadurch gekennzeichnet, dass**

    • die Eingangsgrößen Luftaustauschstrom, Drehzahl und PWM-Signal auf den Eingang des Softsensors gegeben werden,
    • der Softsensor mit einem geeigneten Lernalgorithmus trainiert wird,
    • die Eingangsgrößen approximiert und als Ausgangsgrößen elektrische Leistung und Druckverlust auf einem Speichermedium abgelegt

**2.** Verfahren Anspruch 1, **dadurch gekennzeichnet, dass** die Ausgangsgröße elektrische Leistung als Führungsgröße für eine Kaskadenregelung des Lüftungssystems verwendet wird.

**3.** Verfahren Anspruch 1 oder 2, **dadurch gekennzeichnet, dass** der Softsensor gezielt auf bekannten Mustern der Ausgangsgrößen trainiert wird, so dass die bekannten Muster im Lüftungssystem detektiert werden.

**4.** Verfahren nach Anspruch 3, **dadurch gekennzeichnet, dass** der Softsensor gezielt darauf trainiert wird, dass eine Verschmutzung des Rohrleitungssystems durch ein Muster der Ausgangsgröße Druckverlust abgebildet wird, so dass der Softsensor beim Erkennen dieses Musters eine Warnmeldung ausgibt.

**5.** Verfahren nach Anspruch 3, **dadurch gekennzeichnet, dass** der Softsensor gezielt darauf trainiert wird, dass eine Verschmutzung der Filter im System durch ein Muster der Ausgangsgröße Druckverlust abgebildet wird, so dass der Softsensor beim Erkennen dieses Musters eine Warnmeldung ausgibt.

**6.** Verfahren nach Anspruch 3, **dadurch gekennzeichnet dass** der Softsensor gezielt darauf trainiert wird, dass eine fehlerhafte Einstellung der Ein- und Auslassventile durch ein Muster der Ausgangsgröße Druckverlust abgebildet wird, so dass der Softsensor bei diesem Muster eine Warnmeldung ausgibt.

**7.** Verfahren nach Anspruch 3, **dadurch gekennzeichnet, dass** der Softsensor gezielt darauf trainiert wird, dass ein Einfrieren des Wärmetauschers durch ein Muster der Ausgangsgröße Druckverlust abgebildet wird, so dass der Softsensor beim Erkennen dieses Musters eine Warnmeldung ausgibt.

**8.** Verfahren nach einem der Ansprüche 1 bis 7, **dadurch gekennzeichnet, dass** Geräuschemissionen des Lüftungssystems reduziert wird, in dem die Frequenz als Zielgröße approximiert und damit das Lüftungssystem gezielt geregelt wird.

**9.** Verfahren nach einem der Ansprüche 1 bis 8, **dadurch gekennzeichnet, dass** der Verbrauch der elektrischen Energiemenge des Lüftungssystems in einem gewünschten Zeitraum mit Hilfe des Softsensors ermittelt und prognostiziert wird.

**10.** Softsensor zur Ermittlung der Ausgangsgrößen Leistung und Druckverlust eines aktiven Lüftungssystems im Bereich der Raumlufttechnik, wobei eine Einrichtung durch einen Computer oder eine Schaltung im Lüftungssystem integriert ist, welche direkt, per LAN, WLAN oder Bluetooth an dem Lüftungssystem angeschlossen ist, und wobei der Softsensor mit einem geeigneten künstlichen neuronalen Netz implementiert ist, **dadurch gekennzeichnet, dass** der Softsensor dazu ausgebildet ist, Messgrößen des Lüftungssystems als Eingangsgrößen mit einem geeigneten Lernalgorithmus zu trainieren, und die Ausgangsgrößen als Regel- oder Steuergrößen zu verwenden, um den Betrieb des Lüftungssystem zu regeln oder zu steuern.

**11.** Softsensor nach Anspruch 10, **dadurch gekennzeichnet, dass** der Softsensor mit einem mehrdimensionalen neuronalen Netz mit normierten radialen Basisfunktionen implementiert ist.

**12.** Softsensor nach Anspruch 11, **dadurch gekennzeichnet, dass** der Softsensor mit einem lokalen Modellnetz mit einem Lolimot-Algorithmus trainiert ist.

**13.** Softsensor nach einem der Ansprüche 10 bis 12, **dadurch gekennzeichnet, dass** der Softsensor eine Einrichtung zum Detektieren des Lüftungssystems aufweist.

**14.** Softsensor nach einem der Ansprüche 10 bis 13, **dadurch gekennzeichnet, dass** der Softsensor den elektrischen Energieverbrauch des Lüftungssystems prognostiziert.

**Claims**

**1.** Method for identifying and regulating or controlling linear or non-linear dynamic systems for an active ventilation system in the field of ventilation and air-conditioning technology using a soft sensor which is formed by a computer or is integrated in the ventilation system as a circuit, wherein the soft sensor is implemented with a suitable artificial neuronal network, **characterised in that**

• the input variables air exchange flow, rotational speed and PWM signal to the input of the soft sensor are given,
• the soft sensor is trained with a suitable learning algorithm,
• the input variables are approximated and electric current and pressure loss are stored as output variables on a storage medium,
• the underlying dynamic of the ventilation system is predicted with the output variables and the ventilation system is regulated or controlled.

2. Method according to claim 1, **characterised in that** the output variable, electric current is used as a guide variable for a cascade regulation of the ventilation system.

3. Method according to claim 1 or 2, **characterised in that** the soft sensor is trained specifically in known patterns of the output variables so that the known patterns are detected in the ventilation system.

4. Method according to claim 3, **characterised in that** the soft sensor is trained specifically such that soiling of the pipeline system is represented by a pattern of the output variable, pressure loss so that the soft sensor emits a warning message upon detecting this pattern.

5. Method according to claim 3, **characterised in that** the soft sensor is trained specifically such that soiling of the filter in the system is represented by a pattern of the output variable, pressure loss so that the soft sensor emits a warning message upon detecting this pattern.

6. Method according to claim 3, **characterised in that** the soft sensor is trained specifically such that a defective setting of the inlet and outlet valves is represented by a pattern of the output variable, pressure loss so that the soft sensor emits a warning message in the case of this pattern.

7. Method according to claim 3, **characterised in that** the soft sensor is trained specifically such that freezing of the heat exchanger is represented by a pattern of the output variable, pressure loss so that the soft sensor emits a warning message upon detecting this pattern.

8. Method according to any one of claims 1 to 7, **characterised in that** noise emissions of the ventilation system are reduced in which the frequency is approximated as the target variable and the ventilation system is thus specifically regulated.

9. Method according to any one of claims 1 to 8, **characterised in that** the consumption of the amount of electric energy of the ventilation system is determined and predicted in a desired time period with the aid of the soft sensor.

10. Soft sensor to determine the output variables, current and pressure loss of an active ventilation system in the field of ventilation and air-conditioning technology, wherein a device is integrated in the ventilation system by a computer or a circuit, which is connected to the ventilation system directly, by LAN, WLAN or Bluetooth and wherein the soft sensor is implemented with a suitable artificial neuronal network, **characterised in that** the soft sensor is designed to train measurement variables of the ventilation system as input variables with a suitable learning algorithm and to use the output variables as regulating or control variables in order to regulate or to control the operation of the ventilation system.

11. Soft sensor according to claim 10, **characterised in that** the soft sensor is implemented with a multi-dimensional neuronal network with standardised radial base functions.

12. Soft sensor according to claim 11, **characterised in that** the soft sensor is trained with a local model network with a LOLIMOT algorithm.

13. Soft sensor according to any one of claims 10 to 12, **characterised in that** the soft sensor has a device for detecting the ventilation system.

14. Soft sensor according to any one of claims 10 to 13, **characterised in that** the soft sensor predicts the electric energy consumption of the ventilation system.

**Revendications**

1. Procédé servant à identifier et à réguler ou commander des systèmes dynamiques linéaires ou non linéaires pour un système de ventilation actif dans le domaine de la technique de conditionnement de l'air en utilisant un capteur virtuel, qui est réalisé par un ordinateur ou est intégré dans le système de ventilation en tant que circuit, dans lequel le capteur virtuel est implémenté avec un réseau neuronal artificiel approprié, **caractérisé en ce que**

   - les grandeurs d'entrée, le flux d'échange d'air, la vitesse de rotation et le signal à modulation de largeur d'impulsion, sont données sur l'entrée du capteur virtuel,
   - le capteur virtuel est entraîné avec un algorithme d'apprentissage approprié,
   - les grandeurs d'entrée sont approximées et une puissance électrique et une perte de pression sont enregistrées en tant que grandeurs de sortie sur un support de stockage,
   - la dynamique sous-jacente du système de ventilation est pronostiquée avec les grandeurs de sortie et le système de ventilation est régulé ou commandé.

2. Procédé selon la revendication 1, **caractérisé en ce que** la grandeur de sortie, la puissance électrique, est utilisée en tant que grandeur de pilotage pour une régulation en cascade du système de ventilation.

3. Procédé selon la revendication 1 ou 2, **caractérisé en ce que** le capteur virtuel est entraîné de manière ciblée sur des modèles connus des grandeurs de sortie de sorte que les modèles connus soient détectés dans le système de ventilation.

4. Procédé selon la revendication 3, **caractérisé en ce que** le capteur virtuel est entraîné de manière ciblée pour qu'un encrassement du système de canalisations soit reproduit par un modèle de la grandeur de sortie, la perte de pression, de sorte que le capteur virtuel émette, lors de l'identification dudit modèle, un avertissement d'alerte.

5. Procédé selon la revendication 3, **caractérisé en ce que** le capteur virtuel est entraîné de manière ciblée pour qu'un encrassement des filtres dans le système soit reproduit par un modèle des grandeurs de sortie, la perte de pression, de sorte que le capteur virtuel émette, lors de l'identification dudit modèle, un avertissement d'alerte.

6. Procédé selon la revendication 3, **caractérisé en ce que** le capteur virtuel est entraîné de manière ciblée pour qu'un réglage défectueux des soupapes d'admission et d'évacuation soit reproduit par un modèle de la grandeur de sortie, la perte de pression, de sorte que le capteur virtuel émette, dans le cas dudit modèle, un avertissement d'alerte.

7. Procédé selon la revendication 3, **caractérisé en ce que** le capteur virtuel est entraîné de manière ciblée pour qu'un gel de l'échangeur de chaleur soit reproduit par un modèle de la grandeur de sortie, la perte de pression, de sorte que le capteur virtuel émette, lors de l'identification dudit modèle, un avertissement d'alerte.

8. Procédé selon l'une quelconque des revendications 1 à 7, **caractérisé en ce que** des émissions sonores du système de ventilation sont réduites **en ce que** la fréquence est approximée en tant que grandeur cible et ainsi le système de ventilation est régulé de manière ciblée.

9. Procédé selon l'une quelconque des revendications 1 à 8, **caractérisé en ce que** la consommation de la quantité d'énergie électrique du système de ventilation est déterminée et pronostiquée dans un laps de temps souhaité à l'aide du capteur virtuel.

10. Capteur virtuel servant à déterminer les grandeurs de sortie, la puissance et la perte de pression, d'un système de ventilation actif dans le domaine de la technique de conditionnement de l'air, dans lequel un dispositif est intégré par un ordinateur ou un circuit dans le système de ventilation, lequel est raccordé directement, par LAN, WLAN ou Bluetooth, au système de ventilation, et dans lequel le capteur virtuel est implémenté avec un réseau neuronal artificiel approprié, **caractérisé en ce que** le capteur virtuel est réalisé pour entraîner des grandeurs de mesure du système de ventilation en tant que grandeurs d'entrée avec un algorithme d'apprentissage approprié et pour utiliser les grandeurs de sortie en tant que grandeurs de régulation ou de commande afin de réguler ou de commander le fonctionnement du système de ventilation.

11. Capteur virtuel selon la revendication 10, **caractérisé en ce que** le capteur virtuel est implémenté avec un réseau neuronal multidimensionnel avec des fonctions de base radiales normées.

12. Capteur virtuel selon la revendication 11, **caractérisé en ce que** le capteur virtuel est entraîné avec un réseau de modèle local avec un algorithme Lolimot.

13. Capteur virtuel selon l'une quelconque des revendications 10 à 12, **caractérisé en ce que** le capteur virtuel présente un dispositif servant à détecter le système de ventilation.

14. Capteur virtuel selon l'une quelconque des revendications 10 à 13, **caractérisé en ce que** le capteur virtuel pronostique la consommation d'énergie électrique du système de ventilation.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011002734 B4
- WO 9008293 A
- DE 19600694 A1
- US 7359842 B
- DE 19942144 A1
- DE 102010012682 B4
- KR 101261198